# EUROPÄISCHE PATENTANMELDUNG

(11) **EP 3 381 978 A1**
(43) Veröffentlichungstag der Anmeldung: **03.10.2018**
(21) Anmeldenummer: 18163333.0
(22) Anmeldetag: 22.03.2018
(51) Int. Cl.: C08L 23/00, C08K 3/22

(54) **VERTRÄGLICHKEITSVERMITTLER ZUR VERTRÄGLICHMACHUNG VON POLYOLEFIN-GEMISCHEN, VERFAHREN ZU DESSEN HERSTELLUNG, SOWIE VERFAHREN ZUR HERSTELLUNG VON FORMTEILEN AUS POLYOLEFIN-GEMISCHEN**

(30) Priorität: 27.03.2017 DE 102017106505
(71) Anmelder: NK Neuhäuser Kunststoff GmbH, 98724 Neuhaus am Rennweg (DE)
(72) Erfinder: Götze, Ralf, 98743 Gräfenthal (DE)
(74) Vertreter: Engel, Christoph Klaus

(57) **Zusammenfassung**

Die Erfindung betrifft einen Verträglichkeitsvermittler zur Verträglichmachung von an sich unverträglichen Polyolefin-Gemischen. Der Verträglichkeitsvermittler besteht aus einem Gemisch aus mindestens einem nanoskaligen Doppelmetalloxidhydroxid und mindestens einem Öl.

Die Erfindung betrifft weiterhin ein Verfahren zur Herstellung eines solchen Verträglichkeitsvermittlers, wobei eine Dispersion eines nanoskaligen Doppelmetalloxidhydroxids und ein Öl bereitgestellt werden und dann ein Vermischen der Dispersion des Doppelmetalloxidhydroxids mit dem Öl bei einer Temperatur im Bereich von 60 bis 180°C sowie unter Abgabe des in der Dispersion enthaltenen Lösungsmittels erfolgt.

Die Erfindung betrifft darüber hinaus ein Verfahren zur Verträglichmachung an sich unverträglicher oder nicht mischbarer Polyolefine, wobei 99 bis 70 Teile eines oder mehrerer Polyolefine gemeinsam mit 0,5 bis 10 Teilen eines nanoskaligen Doppelmetalloxidhydroxids und mit 0,5 bis 20 Teilen eines Öls unter Einwirkung hoher Scherkräfte verarbeitet werden.

## Beschreibung

Die Erfindung betrifft einen Verträglichkeitsvermittler für Polyolefin-Gemische aus mindestens zwei verschiedenen Polyolefinen, die miteinander ganz oder teilweise unverträglich sind. Weiterhin betrifft die Erfindung ein Verfahren zur Herstellung solcher Verträglichkeitsvermittler sowie ein Verfahren zur Herstellung von Formteilen aus auf dieser Weise verträglich gemachten Polyolefin-Blends.

Als Polyolefine werden alle Typen von Polyethylen, Polypropylen, Poly(iso)butylen, Copolymere aus den diesen zugrunde liegenden Olefinen oder Copolymere mit weiteren Olefinen wie Hexen, Vinylcyclohexan oder Diolefinen wie Butadien bezeichnet. Einige dieser Polyolefine sind miteinander unverträglich, d. h. es wird nicht eine einzige Phase nach dem gemeinsamen Schmelzen ausgebildet, sondern es bilden sich beim Abkühlen aus der Schmelze zwei oder mehr Phasen. Dieses Problem tritt insbesondere bei Polyethylen-Typen und Polypropylen auf. Diese beiden, am häufigsten verwendeten Polyolefine sind miteinander unverträglich, was bei Gemischen aus diesen Stoffen und insbesondere bei deren Verarbeitung beträchtliche Probleme verursacht.

Zur Verträglichmachung solcher Polyolefingemische sind in der Technik verschiedene Wege beschrieben worden. So wurde z. B. die Verwendung von zusätzlichen Copolymeren vorgeschlagen, die die Phasen miteinander verbinden sollen. Bekannt sind auch spezielle - z. B. Carbonsäuren oder Doppelbindungen enthaltende - Copolymere, die mit jeweils einer der Komponenten des Gemisches reagieren sollen. Ebenso wird versucht, eine der Komponenten des Gemisches zu modifizieren oder Verbindungen mit Gruppen zu erzeugen, die jeweils mit einer Komponente des Gemisches reagieren. In der Regel sind diese Verfahren auf ZweiStoff-Gemische begrenzt.

Als Polymerblends oder Polymermischungen werden üblicherweise die Mischungen von zwei oder mehr Thermoplasten bezeichnet. Um gute mechanische Eigenschaften in Polymer-Polymer-Blends zu erreichen, ist ein Mindestmaß von Verträglichkeit bzw. Mischbarkeit der entsprechenden Komponenten erforderlich (M. Hara, J. A. Sauer, Synergism in Mechanical Properties of Polymer/Polymer Blends, J. Macromol. Sci. Pt. C: Polymer Revs. 38 (2), 327 - 362 (1998)). Eines der üblichen Verfahren bei unverträglichen Polymer-Mischungen ist der Einsatz von Verträglichkeitsvermittlern, z. B. von Copolymeren oder Block-Copolymeren der beiden Komponenten, was in der Regel zu feinerer Dispersion oder verbesserter Adhäsion zwischen den Phasen führt (B. Majunder, H. Keshkuls, D. R. Paul, J. Polym. Sci. Pt. B Polymer Physics 32, 2127 (1994)). Ein anderes Verfahren besteht darin, eine der Komponenten des Gemisches durch Copolymerisation mit einem anderen Monomer oder Polymer zu modifizieren, wobei diese Komponente dann mit dem anderen Bestandteil des Gemisches besser verträglich ist. Eine weitere Methode ist, jede der Komponenten eines unverträglichen Paares von Polymeren durch Einführung geeigneter funktioneller Gruppen, die miteinander in Wechselwirkung treten können, zu modifizieren. So wurden Gemische der unverträglichen PE und PP durch Verwendung eines Olefin-Blockcopolymeren (Ethylen-Octen-Copolymer) verwendet, um diese Gemische verträglich zu machen (DuPont de Nemours Co., Pressemitteilung Genf, Oktober 2013).

Weiterhin ist die Herstellung von Polymer-Nanokompositen bekannt. Als Nanomaterialien werden im Wesentlichen modifizierte Schichtsilikate (Montmorrilonit, Sepionit, Laponit etc.) verwendet, die vor ihrem Einsatz durch quarternäre Ammoniumverbindungen oder Carboxylate einschließlich langkettiger Carbonsäuren (C₁₂ bis C₂₀) modifiziert und/oder interkaliert werden (C. Manzi-Nshuti et al., Polymer 50, 3564 - 3574 (2009)).

Die US 5,952,093 A beschreibt die Verwendung von Schichtmaterialien mit zwischen den Schichten interkalierten organischen Stoffen zur Herstellung von Polymer-Kompositen. Danach ist der erste Schritt des Verfahrens die Interkalation der Schichtsilikate und der Mischung der interkalierten Materialien und dem Polymeren in der Schmelze, wodurch das interkalierte Material in der Schmelze dispergiert wird.

Gemäß der US 8,026,309 B2 wird in einem Verfahren zur Herstellung verträglich gemachter Polyblends zunächst ein erstes thermoplastisches Polymer und eine reaktive Verbindung durch Schmelzekneten dadurch miteinander vermischt, dass eine erste reaktive Gruppe mit dem ersten thermoplastischen Polymer reagiert. Dieses Gemisch wird dann durch Schmelzekneten derart verarbeitet, dass die erste reaktive Gruppe mit dem ersten Polymer reagiert, aber ein zweiter Typ einer reaktiven Gruppe nicht reagiert, so dass eine Schmelze eines selbst-verträglichen Polymer gebildet wird, das danach mit einem zweiten Polymer wiederum im Schmelzekneter verarbeitet wird, so dass der zweite Typ der reaktiven Gruppen mit dem zweiten Polymer reagieren kann.

Gemäß der WO 2007/068 656 A1 können Polyolefine aus dem Recycling mit modifizierten nanoskaligen Tonen (clay) zu Zusammensetzungen mit verbesserten Eigenschaften verarbeitet werden. Nach der WO 2014/147 106 A2 können dazu auch Calciumoxid und Calciumcarbonat oder Talkum oder Glasfasern oder Holzmehl verwendet werden.

In der WO 2004/000 517 A1 wird eine Polyolefin-Zusammensetzung im wesentlichen ohne Zusatz von die Verträglichkeit verbessernden Elastomeren (TPO) beschrieben, wonach durch die Einarbeitung von Polybuten-1 und einem exfolierten anorganischen Nanokomposit sowie einem Kopplungsreagens eine Verbesserung der Verträglichkeit mit Pigmenten und der Oberflächen erreicht wird.

Gemäß der EP 2 195 349 B1 und der EP 2 201 042 B1 werden Gemischen von Polyolefinen während der Herstellung aus den Monomeren in Gegenwart von Katalysatoren zur Olefin-Polymerisation zur Verträglichmachung Weichmacher zugesetzt. Als Weichmacher können Oligomere, weiche Polymere oder andere, nicht näher bezeichnete Flüssigkeiten verwendet werden.

Gemäß der WO 2016/038110 A2 werden Polymer-Zusammensetzungen aus wenigstens zwei Polyethylen-Polymeren, unter anderem auch Recycling-Polymere, und funktionellen Füllstoffen hergestellt, wobei die Oberfläche des funktionellen Füllstoffs mit einem Reagens behandelt wird und mit mindestens einem Polymeren, vorzugsweise HDPE, ein Masterbatch hergestellt wird.

In der WO 2016/205192 A1 werden Zusammensetzungen für den Reaktionsspritzguss beschrieben, die aus gefüllten Polymeren bestehen, wobei die Polymeren aus dem Recycling stammen und die Füllstoffe anorganische Stoffe mit einer Oberflächenbeschichtung sind.

In der US 7,732,514 B2 werden Zusammensetzungen beschrieben, aus einem Polymeren, einem anorganischen teilchenförmigen Feststoff, z. B. Aluminiumtrihydroxid, Kalziumcarbonat, Magnesiumoxid, Magnesiumhydroxid, und einem verbindenden Material der allgemeinen Formel A-(X-Y-CO)ₘ(O-B-CO)ₙOH, in der A ein Alkylenrest mit einer endständigen Doppelbindung ist, wobei diese verbindenden Modifikatoren Carboxylethylacrylat oder 5-Carboxypentyl-maleinimid sein können.

Aus der US 2013/0005871 A1 ist ein Verfahren zur Herstellung und organischen Funktionalisierung eines geschichteten Doppelmetallhydroxids bekannt.

Allen zuvor genannten Verfahren ist gemeinsam, dass immer eine Reaktion stattfinden soll, entweder im Vorfeld bei der Herstellung der partikulären Feststoffe mit die Oberfläche modifizierenden Stoffen oder direkt während der Verarbeitung, entweder zur Herstellung der Polymeren selbst, von Masterbatches oder während der Verarbeitung durch Spritzguss oder Reaktionskneten in der Schmelze. Diese in der Regel zwei- oder mehrstufigen Verfahren sind kosten- und energieintensiv. Auch die Verwendung von speziellen Copolymeren erfordert in der Regel eine weitere Schmelzestufe, oftmals auch mehrere Stufen, die dann wieder zu einer thermischen Schädigung des oder der Polymeren führen können.

Eine Aufgabe der vorliegenden Erfindung ist es somit, einen verbesserten Verträglichkeitsvermittler für ein Verfahren zur Verträglichmachung an sich unverträglicher oder nicht mischbarer Polyolefine zur Verfügung zu stellen.

Erfindungsgemäß wird die Aufgabe durch einen Verträglichkeitsvermittler gemäß Anspruch 1, ein Verfahren zur Herstellung eines Verträglichkeitsvermittlers gemäß Anspruch 4, ein Verfahren zur Verträglichmachung an sich unverträglicher oder nicht mischbarer Polyolefine gemäß Anspruch 6, sowie durch ein Verfahren zur Herstellung von Formteilen aus Gemischen von Polyolefinen und Verträglichkeitsvermittlern gemäß Anspruch 8 gelöst.

Erfindungsgemäß werden mindestens zwei Polyolefine mit mindestens einem speziellen Öl und mindestens einem nanoskaligen Doppelmetalloxidhydroxid, welches aus mindestens zwei Metallen in unterschiedlichen Verhältnissen und geeigneten Gegenionen besteht, in einer Schmelze von mindestens zwei thermoplastischen Kunststoffen verarbeitet.

Es wurde überraschend gefunden, dass bestimmte Öle in Kavitäten oder zwischen den Schichten von nanoskaligen Doppelmetalloxidhydroxiden derart eingelagert werden können, dass ihre langen Ketten mit den Polyolefin-Molekülen in Wechselwirkung treten und sich die nanoskaligen Metalloxide in den durch die langen Ketten der Öle modifizierten Oberflächenschichten verhaken und auf diese Weise die Polyolefine miteinander verbinden, so dass eine homogene Phase entsteht, die in sich nicht mehr trennbar ist.

Der erfindungsgemäße Verträglichkeitsvermittler ermöglicht die Verträglichmachung von an sich unverträglichen Polyolefin-Gemischen und besteht aus einem Gemisch von nanoskaligen Doppelmetalloxidhydroxiden und speziellen Ölen.

Vorzugsweise finden als die nanoskaligen Doppelmetalloxidhydroxide solche des Aluminiums, Magnesiums, Zinks oder Indiums Anwendung. Gemäß bevorzugter Ausführungsformen sind die nanoskaligen Doppelmetalloxidhydroxide natürliches Böhmit, ein oder mehrere Stoffe der Hydrotalkitgruppe, Hydrotalkit, Comblainit, Desautelsit, Pyroaurit, Reevesit, Sergeevit, Stichtit und/oder Takovit.

Eine Gruppe von Additiven zur Steuerung von Eigenschaften von thermoplastischen Kunststoffen ist die der geschichteten Doppelmetall-Hydroxide (layered double metal hydroxides = LDH) mit einer Modifizierung der Oberfläche durch Umsetzung reaktiver Gruppen, um Pfropfungen zu erhalten, oder die Schichten zu interkalieren, um die Eigenschaften des Basispolymeren positiv zu beeinflussen. Die Doppelmetall-Hydroxide (LDH) zählen ebenso wie das natürliche Böhmit zu den Doppelmetalloxidhydroxiden, die erfindungsgemäß verwendet werden. In LDH werden durch partielle Dehydratisierung (Rösten) einige OH-Gruppen zu Oxidgruppen gewandelt. Das natürliche Böhmit enthält mehr als ein zusätzliches Metall.

Geschichtete Doppelmetall-Hydroxide (LDH) ist der Name einer Gruppe von Stoffen, die sowohl aus natürlichen Mineralien als auch synthetischen Mineralien bestehen und typischerweise eine Schichtstruktur aufweisen. Synthetische LDH sind Verbindungen, die die gleiche Struktur und die gleichen Eigenschaften wie ihre natürlichen Vorbilder aufweisen und in der Natur nicht vorkommen oder bisher nicht nachgewiesen wurden. LDH sind den Tonmineralien ähnlich auf Grund ihrer Fähigkeit zum Austausch intercalierter Anionen. Die LDH werden in der Hydrotalcit-Obergruppe subsumiert. Damit können alle LDH in Untergruppen eingeordnet werden: Hydrotalcit-Gruppe, Glaucocerinit-Gruppe, Quintit-Gruppe, Fougerit-Gruppe, Woodwardit-Gruppe, Cualbitit-Gruppe, Wermlandit-Gruppe, Hydrocalumit-Gruppe.

Natürlich vorkommende Materialien, z. B. Böhmit, können mit anderen Elementen kontaminiert sein und auf diese Weise eine völlig andere, z. B. schicht- oder stäbchenförmige Morphologie ausbilden, beim Böhmit, einem Aluminiumoxidhydroxid z. B. mit Eisen, Silicium, Titan, Chrom, Mangan oder Vanadium. Dieses natürlich vorkommende Böhmit mit zwei und mehr Kationen und einer schichtförmigen Struktur wird innerhalb der Erfindung genutzt und entspricht den LDH in Struktur und Wirkungsweise, weist aber teilweise mehr als ein Metallion auf.

Einige LDH können auch als Monoschichten hergestellt werden, kommen aber nicht in dieser Form natürlich vor. Zu den LDH zählen deshalb neben den klassischen, natürlich vorkommenden Mineralien viele andere, die eine andere Struktur aufweisen und dabei sowohl in einer einzigen Schicht vorkommen können oder aus mehreren Metallkationen aufgebaut sind.

Erfindungsgemäß werden natürliche LDH und spezielle, durch weitere Kationen modifizierte synthetische LDH bevorzugt.

Bevorzugt findet als das Öl ein modifiziertes Mineralöl und/oder ein Hydrauliköl HEES, HEPR, HETG oder UTTO, die aus Gemischen oder Verbindungen aus natürlichen und synthetischen Kohlenwasserstoffen bestehen, Anwendung.

Solche Hydrauliköle oder modifizierten Öle sind bekannt. Die auf Estern basierenden Hydrauliköle sind
HETG auf der Basis von Triglyceriden, d. h. pflanzlichen Ölen,
HEES auf der Basis von synthetischen Estern,
HEPR auf der Basis von synthetischen Kohlenwasserstoffen.
Dazu kommen Mischungen der vorgenannten Öle, die z. B. unter der Bezeichnung UTTO = Universal Tractor Transmission Oil vertrieben werden.

Weiterhin sind erfindungsgemäß Hochleistungs-Hydraulikflüssigkeiten auf der Basis synthetischer Poly-α-olefine (PAO) geeignet, die ebenfalls in bestimmten Produkten mit synthetischen Estern gemischt sind. Ein Beispiel für ein HEPR-ÖI ist das EvoFluid PE-B 1. Beispiele für geeignete HEES-Öle sind TECTROL TERRA HYD S, TECTROL TERRA HYD SUPER S, Veedol Hydraulic Synth ECO 46, Veedol Hydrauliköl Synth S 46, EUROL NATEC 46, Agip ARNICA S 32, Agip ARNICA S 46 etc. Beispielsweise kann ein HEES - HEPR-Hydrauliköl wie Agip ARNICA S 68 erfindungsgemäß eingesetzt werden.

Die Zusammensetzung der industriell verfügbaren Öle ist variabel und nicht exakt bekannt. Die genannten Hydrauliköle wirken nach zwei Mechanismen - ein Teil des Öls, der natürliche, ist in der Lage, mit der Oberfläche der LDH in Wechselwirkung zu treten und/oder diese zu intercalieren, der zweite Teil des Öls, der synthetische Kohlenwasserstoffteil, dagegen ist in der Lage, mit den Polyolefinen in Wechselwirkung zu treten und diese soweit zu modifizieren, dass die LDH-Partikel sich mit den Oberflächenschichten der Phasen verhaken können.

Das Öl ist ein spezielles synthetisches Öl auf der Basis von Poly-α-olefinen, ein Buten-1-Oligomeres, ein Buten-1-Propylen-Oligomeres oder ein Butadien-Oligomeres, insbesondere mit einer Molmasse von 180 bis 10.000. Die Öle dieser Ausführungsform des erfindungsgemäßen Verfahren interkalieren die LDH nicht, wirken aber durch ihr Eindringen in die Grenzflächen der Phasen, so dass die nanoskaligen Partikel sich dann zwischen diesen verhaken können und so zur Verträglichmachung des Systems führen.

Derartige erfindungsgemäße Verträglichkeitsvermittler können während des Schmelzprozesses oder vorher in einem speziellen Verfahren hergestellt werden und dann im Schmelzprozess eingesetzt werden.

Eine Ausführungsform des Verfahrens zur Herstellung des erfindungsgemäßen Verträglichkeitsvermittlers in den zuvor genannten und weiteren Ausführungen zeichnet sich dadurch aus, dass 10 bis 60 Teile einer wässrigen Dispersion eines nanoskaligen Doppelmetalloxidhydroxids mit 90 bis 40 Teilen eines Öls vermischt und bei Temperaturen von 60 bis 180°C unter Abgabe des Wassers zu einer Öldispersion verarbeitet werden.

Gemäß einer abgewandelten Ausführungsform des Verfahrens zur Herstellung der Verträglichkeitsvermittler werden 10 bis 60 Teile eines nanoskaligen Doppelmetalloxidhydroxids unter Anwendung hoher Scherkräfte mit einem Lösungsmittel (incl. Wasser unter Überdruck) oder Öl vermischt und bei Temperaturen von 60 bis 180°C unter Abgabe eines Teils des Wassers zu einer Dispersion verarbeitet. Diese Dispersion wird nachfolgend mit dem Öl vermischt.

Gemäß einer weiteren Ausführungsform des erfindungsgemäßen Verfahrens wird bei Temperaturen von 5 bis 85°C eine Dispersion aus dem speziellen Öl, insbesondere einem HEES- oder HEES-HEPR-Hydrauliköl, und bis zu 20 Gew.-Teilen eines LDH in Form von festen Teilchen mittels eines hochtourigen Rührers, z. B. bei 3000 bis 15.000 min⁻¹, hergestellt und diese anschließend in das unverträgliche Polyolefingemisch eingearbeitet.

Zur vorherigen Herstellung des Verträglichkeitsvermittlers, d. h. außerhalb des Prozesses zur Verarbeitung der Polyolefin-Gemische, sind verschiedene Verfahren möglich, von denen drei bevorzugte Ausführungsformen nachfolgend mit ihren wichtigsten Schritten dargestellt sind:

### Verfahren (1)

Zwei oder mehr in Wasser oder einem organischen Lösungsmittel, z. B. einem Alkohol, dispergierte Metalloxide, Metallhydroxide und/oder Metalloxidhydroxide werden unter Scherung derart miteinander gemischt, dass sich kleine Agglomerate bilden, die während der nachfolgenden Trocknung zu nanoskaligen Teilchen verbunden werden und mit der Trocknung eine partikuläre, komplexe Struktur mit Hohlräumen erhalten. Diese nanoskaligen Teilchen werden anschließend mit einem oder mehreren Ölen vermischt und unter hoher Scherkraft, z. B. in einem Kneter, einem Extruder, einem Mischerkneter oder einer Planetenmühle, homogenisiert.

### Verfahren (2)

Zwei oder mehr in Wasser oder einem organischen Lösungsmittel, z. B. einem Alkohol, dispergierte Metalloxide, Metallhydroxide und/oder Metalloxidhydroxide werden in ein Öl gegeben, mit diesem zu einer Emulsion vermischt, durch Temperaturerhöhung und ggf. vermindertem Druck das Wasser abgedampft, die Temperatur weiter gesteigert, so dass die Metalloxide/hydroxide/oxidhydroxide zumindest einen Teil ihres molekularen Wassers abgeben und nanoskalige Partikel im Öl derart bilden, dass chemische Gruppen aus dem Öl in Kavitäten der Teilchen adsorptiv gebunden werden.

### Verfahren (3)

Zwei oder mehr in Wasser oder einem organischen Lösungsmittel, z. B. einem Alkohol, dispergierte Metalloxide, Metallhydroxide und/oder Metalloxidhydroxide werden in einem Kneter oder Extruder bei erhöhter Temperatur zu einem oder mehreren Ölen unter Prozessbedingungen hinzugefügt und durch weitere Temperaturerhöhung und ggf. unter vermindertem Druck das Wasser einschließlich eines Teils des molekularen Wassers der Metalloxide/hydroxide/oxidhydroxide entfernt und so eine Dispersion der nanoskaligen komplexen Partikel im Öl hergestellt.

Dem Fachmann sind weitere Verfahren zur Herstellung solcher Dispersionen von Nanopartikeln in Interkalationsmitteln bekannt (siehe z. B. auch L. Perioli et al., Sunscreen immobilization of ZnAl-hydrotalcite for new cosmetic formulations, Microporous and Mesoporous Materials 107, 180 - 189 (2008) oder X. Yu.et al., Giant Surfactants Based on Molecular Nanoparticles: Precise Synthesis and Solution Self-assembly, J. Polymer Sci., pt. B 52, 1309 - 1325 (2014) oder J.-M. Oh, T. T. Biswick, J.-H. Choy, Layered nanomaterials for green materials, J. Mater. Chem. 19, 2553-2563 (2009)).

Alternativ können die Komponenten des Verträglichkeitsvermittlers direkt einer ggf. inhomogenen Schmelze von Polyolefin-Gemischen zugesetzt werden. Die Zugabe kann dabei in beliebiger Reihenfolge oder als nicht weiter vorbehandelte Mischung erfolgen. Die Reihenfolge, erst das Öl und danach den Feststoff zuzugeben, wird bevorzugt.

Eine Ausführung des Verfahrens zur Verträglichmachung an sich unverträglicher oder nicht mischbarer Polyolefine nutzt eine der Ausführungsformen des erfindungsgemäßen Verträglichkeitsvermittlers und zeichnet sich dadurch aus, dass 99 bis 70 Teile eines oder mehrerer Polyolefine mit 0,5 bis 10 Teilen eines nanoskaligen Doppelmetalloxidhydroxids und mit 0,5 bis 20 Teilen eines speziellen Hydrauliköls unter Einwirkung hoher Scherkräfte verarbeitet werden.

Eine abgewandelte Ausführung des Verfahrens zur Verträglichmachung an sich unverträglicher oder nicht mischbarer Polyolefine nutzt eine der Ausführungen des erfindungsgemäßen Verträglichkeitsvermittlers und zeichnet sich dadurch aus, dass 99 bis 70 Teile eines oder mehrerer Polyolefine mit 1 bis 30 Teilen des Verträglichkeitsvermittlers umgesetzt werden.

Die Erfindung gestattet somit die Herstellung von Formteilen aus Gemischen von Polyolefinen und dem zuvor beschriebenen Verträglichkeitsvermittler, wobei 99 bis 70 Teile eines Polyolefingemisches mit 0,5 bis 10 Teilen eines nanoskaligen Doppelmetalloxidhydroxids und mit 0,5 bis 20 Teilen eines speziellen Hydrauliköls unter Einwirkung hoher Scherkräfte im Extruder, im Mischer-Kneter, im Kneter oder in der Spritzgießmaschine verarbeitet werden.

Gemäß bevorzugter Ausführungsformen werden bei einer derartigen Herstellung von Formteilen Polyolefin-Gemische aus Recycling, insbesondere ohne vorherige Sortierung, oder aber Polyolefin-Gemische aus der DSD-Sammlung eingesetzt.

Bei Einarbeitung der vorgebildeten Verträglichkeitsvermittler-Mischungen kann dies an jedem Punkt der Schmelze im Extruder, Kneter, Mischerkneter oder der Spritzgießmaschine erfolgen. Es ist dabei nicht erforderlich, dass das Polyolefin-Gemisch vollständig aufgeschmolzen ist, d. h. das Gemisch kann auch durch Vermischen mit den Granulaten der Polyolefine oder mit Partikeln ("flakes") aus dem Recycling-Prozess erfolgen.

Als Polyolefine können in den erfindungsgemäßen Produkten und im erfindungsgemäßen Verfahren alle bekannten Typen des Polyethylens(LDPE, HDPE, LLDPE, HMWPE, UHMWPE usw.), des Polypropylens (isotaktisches, ataktisches, syndiotaktisches Polypropylen oder Gemische), von Copolymeren des Ethylens und Propylens oder von Copolymeren von Ethylen und/oder Propylen mit Buten, Hexen, Octen, Vinylcyclohexan usw. verwendet werden. Die verfügbare Zahl an solchen Copolymeren ist groß und wächst ständig, so dass sämtliche mögliche Varianten, die dem Fachmann bekannt sind oder zukünftig bekannt werden, hier grundsätzlich erfasst sein sollen.

Weiterhin können Gemische aus dem Recycling, wie sie z. B. bei der Sammlung von Verpackungsabfällen oder Haushaltsabfällen gewonnen werden, nach entsprechender Reinigung verwendet werden. Es hat sich gezeigt, dass kleinere Mengen an Fremdbestandteilen in den Mischungen das erfindungsgemäße Verfahren nicht stören, außer im Falle des PVC, dessen Anteil nach Möglichkeit minimal sein sollte. Es hat sich weiterhin gezeigt, dass auch Gummiabfälle oder Elastomere im erfindungsgemäßen Verfahren ohne Eigenschaftsverlust bis zu 10 Gew.-% mit verarbeitet werden können.

Als Öle kommen im Wesentlichen Hydrauliköle mit den Bezeichnungen H, HVLP, HM, HV mit definierter Zusammensetzung, Copolymeröle, die als HEES, HEPR, HETG oder UTTO bezeichnet werden in Frage. Es können auch Motoren- und Getriebeöle oder Weißöle verwendet werden. Weiterhin kommen Hydrauliköle auf der Basis umgeesterter natürlicher Öle und modifizierte natürliche Öle, insbesondere pflanzliche Öle, in Betracht. Hierzu gehören die Hydraulikflüssigkeiten der Klassen HETG auf der Basis von Triglyceriden, HEES auf der Basis synthetischer Ester oder HEPR auf der Basis von Poly-α-olefinen. Die als Basismaterial eingesetzten Triglyceride sind in der Regel natürlich vorkommende Öle wie Rapsöl, Sojaöl, Palmöl, Babassuöl, Kokosöl etc., die ggf. durch chemische Prozesse wie Umesterungen mit meist mehrwertigen Alkoholen (auch langkettigen Diolen oder Polyethern) oder Carbonsäuren (z. B. Phthalsäure, Adipinsäure, Sebacinsäure etc.) modifiziert sein können, z. B. auch Hydrauliköle des Typs HFD-U. Weiterhin kommen Gemische der Hydraulikflüssigkeiten wie Gemische von HEES-HEPR-Typen in Betracht.

Bevorzugt werden die modifizierten natürlichen Öle, spezielle synthetische Öle auf der Basis von Poly-α-olefinen, z. B. Oligomere oder Polymere auf der Basis von Buten oder oligomere Copolymere auf der Basis von Propylen und Buten, Umsetzungsprodukte von natürlichen Ölen mit funktionellen monomeren oder oligomeren Kohlenwasserstoffen wie oligomere Poly-1-Butene der Molmasse Mₙ 1000 bis 10.000 oder Hydroxypolybutadienen mit einer oder zwei Hydroxylgruppen.

Besonders bevorzugt werden oligomere Butenpolymerisate der Molmasse Mₙ 180 bis 6000, oligomere Mischpolymerisate des Butens mit Propylen, Ethylen, Butadien, EPDM der Molmasse Mₙ 200 bis 8000, modifizierte HEES Hydrauliköle wie Lomol® Bioöl, Lomol® HEES 46, Lomol® HVLP ISO VG 32 oder 40 oder 68, Tectrol® UTTO-F, Tectrol Opta HLP 6/6, Tectrol® Terra HYD S 60 etc.

Als Metalloxide können vor allem die Oxide der Elemente der 2. und 3. Hauptgruppe des Periodensystems verwendet werden, insbesondere die des Aluminiums, Magnesiums, aber auch von Nebengruppenelementen wie Zink oder Indium, Cobalt, Eisen, Titan, Mangan; als Metallhydroxide kommen die Oxide der Elemente der 2. und 3. Hauptgruppe des Periodensystems verwendet werden, insbesondere die des Aluminiums, Magnesiums, aber auch von Nebengruppenelementen wie Zink oder Indium in Frage. Weiterhin können schichtbildende Doppelmetallhydroxide (LDH) eingesetzt werden, z. B. des Zink, Calcium, Magnesium, Aluminium etc. wie sie dem Fachmann bekannt sind (siehe z. B. loc. cit. J.-M. Oh et al. oder P. Nalawade, B. Aware, V. J. Kadam, R. S. Hirlikar, J. Sci. Ind. Res. 68, 267 - 272 (2009)).

Bevorzugt werden Metalloxidhydroxide vor allem des Aluminiums wie natürliches Böhmit oder in Gemischen mit Indium oder Magnesium oder natürlich vorkommende Mineralien ggf. mit weiteren Elementen oder Gruppen, z. B. Carbonaten, wie Hydrotalkit, weiteren Mitgliedern der Hydrotalkitgruppe wie Comblainit, Desautelsit, Pyroaurit, Reevesit, Sergeevit, Stichtit und Takovit.

Besonders bevorzugt werden nanoskalige natürliche Böhmite als kalzinierte Feststoffe (aus pyrogenen Verfahren) oder wässrige oder alkoholische Dispersionen.

Bei der Verarbeitung nach dem erfindungsgemäßen Verfahren können weitere Additive eingesetzt werden, z. B. nanoskalige oder mikronisierte Pigmente, Farbstoffe, Füllstoffe, Flammschutzmittel, Modifikatoren, Verarbeitungshilfsmittel wie Gleitmittel oder Formtrennmittel, Stabilisatoren gegen Verfärbung oder Oxidation oder thermischen Abbau usw.

Die nach dem erfindungsgemäßen Verfahren hergestellten Polyolefin-Blends werden mittels Extrusion, Kneten, kontinuierlichem Kneten, Spritzguss oder bei Verwendung geeigneter Zusatzstoffe mittels Reaktionsspritzguss verarbeitet. Aus den erfindungsgemäß konfigurierten Mischungen können Formteile, Hohlkörper, Flaschen, Flakons, Verkapselungen, Profile oder Polyolefin-Schaumstoffe oder - Integralschaumstoffe hergestellt werden.

Bei der Herstellung von Teilen durch Extrusion können erfindungsgemäß vorzugsweise die folgenden Verfahren angewandt werden:
***a.)*** indem in die Schmelze im Extruder unter gegebenen Temperatur-Bedingungen von 160 bis 250°C und Verweilzeiten von 20 s bis 30 min das Öl und der nanoskalige Feststoff separat dosiert werden;
***b.)*** indem das Polyolefin-Granulat mit einem Masterbatch aus einem oder mehreren Polyolefinen vermischt und dieses Gemisch extrudiert wird;
***c.)*** indem in die Schmelze des Polyolefin-Gemisches ein Verträglichkeitsvermittler-Batch aus einem oder mehreren Ölen und einem oder mehreren nanoskaligen Metalloxidhydroxiden gegeben wird und das Gemisch dann unter Temperatur-Bedingungen von 160 bis 250°C und Verweilzeiten von 20 s bis 30 min zu Profilen verarbeitet wird;
***d.)*** indem in die Schmelze ein aus einem oder mehreren Ölen und einer wässrigen oder alkoholischen Dispersion eines oder mehrerer Metalloxide und/oder Metallhydroxide unter kalzinierenden Bedingungen hergestelltes Batch eingearbeitet wird und dieses unter Temperatur-Bedingungen von 160 bis 250°C und Verweilzeiten von 20 s bis 30 min zu Profilen verarbeitet wird.

Um Formteile im Spritzgießverfahren herzustellen, können ähnliche Bedingungen angewandt werden. Dabei können die erfindungsgemäßen Verträglichkeitsvermittler sowohl vor dem Spritzgussprozess als auch während des Prozesses über seitliche Zuführungen dosiert werden. Somit können erfindungsgemäß zum Spritzgießen von Formteilen:
***a.)*** zu einem Polyolefin-Granulat aus einem oder mehreren Polyolefinen ein Masterbatch aus einem oder mehreren Polyolefinen mit einem oder mehreren Ölen und einem oder mehreren nanoskaligen Metalloxidhydroxiden vorher gegeben und mit diesem vermischt und dieses Gemisch unter üblichen Bedingungen bei Temperaturen von 170 bis 250°C verspritzt werden;
***b.)*** zu einem feinen Polyolefin-Granulat oder -Pulver ein oder mehrere Öle und ein oder mehrere nanoskalige Metalloxidhydroxiden und/oder Metalloxide vorher gegeben und mit diesem vermischt und dieses Gemisch unter üblichen Bedingungen bei Temperaturen von 170 bis 250°C verspritzt werden;
***c.)*** zu einem Polyolefin-Granulat oder -Pulver aus einem oder mehreren Polyolefinen ein Verträglichkeitsvermittler-Batch aus einem oder mehreren Ölen und einem oder mehreren nanoskaligen Metalloxidhydroxiden gegeben und das Gemisch unter Temperatur-Bedingungen von 160 bis 250°C und Verweilzeiten von 20 s bis 30 min verspritzt werden;
***d.)*** zu einem Polyolefin-Granulat oder -Pulver aus einem oder mehreren Polyolefinen ein Verträglichkeitsvermittler-Batch, das aus einem oder mehreren Ölen und einer wässrigen oder alkoholischen Dispersion eines oder mehrerer Metalloxide und/oder Metallhydroxide unter kalzinierenden Bedingungen hergestelltes Batch eingearbeitet und dieses unter Temperatur-Bedingungen von 160 bis 250°C und Verweilzeiten von 20 s bis 30 min verspritzt werden.

Weiterhin können analog Polyolefin-Schaumstoffe mit einer Dichte zwischen 10 und 500 g/dm³ hergestellt werden, indem in eine Schmelze, die nach einem der oben beschriebenen Verfahren hergestellt wurde, ein Gas mit einem Druck von 5 bis 500 at (0,5 bis 50 MPa) eingespeist oder ein Gasplasma aus Kohlendioxid oder Stickstoff oder ein überkritisches Gas oder Gasgemisch in die Schmelze dosiert wird.

Nachfolgend werden mehrere Beispiele zur Ausführung der Erfindung beschrieben. Dabei verwendete Abkürzungen und Handelsprodukte sind:
Mₙ = mittleres Zahlenmittel des Molekulargewichts / der Molmasse
D = Polydispersität
POB = Polyolefin-Blend
PP = Polypropylen
HDPE = high density polyethylene

### Herstellung eines Doppelmetalloxid-hvdroxids (DMH1)

100 ml einer 43,5 %igen Aufschlämmung von Magnesiumhydroxid in Wasser und 250 ml einer 33 %igen Aufschlämmung von Aluminiumhydroxid in Wasser werden eine Stunde in einem offenen Becher von 750 ml Inhalt mit 250 min⁻¹ gerührt. Danach wird die Temperatur langsam erhöht, bis das Wasser siedet. Unter Verdampfung von Wasser wird weiter gerührt, bis das Gemisch nicht mehr rührfähig ist. Danach wird das Gemisch entnommen und auf einer PTFE-Platte zu einem 2 mm Film ausgestrichen. Dieser Film wird bei 180°C im Umluftofen drei Stunden getrocknet. Anschließend wird abgekühlt und in einer Perl-Rührwerksmühle (3,8 mm Perlen) vermahlen. Das so erhaltene Mahlgut wird gesiebt (320 mesh Sieb) und die Feinfraktion von 37,5 g in 150 ml Dealen RD25 dispergiert. Die Grobfraktion wird erneut vermahlen.

### Herstellung eines Verträglichkeitsvermittlers D1

Das Gemisch aus den 37,5 g Mahlgut DMH1 und 150 ml Dealen RD25 wird acht Stunden in der Knetkammer mit Sigma-Schaufeln geknetet. Dieses Material wird so als Verträglichkeitsvermittler D1 verwendet.

### Herstellung eines Doppelmetalloxid-hvdroxids (DMH2)

220 g einer 30 %igen Aufschlämmung von Magnesiumhydroxid in Wasser und 250 ml einer 33 %igen Aufschlämmung von Aluminiumhydroxid in Wasser werden eine Stunde in einem offenen Becher von 750 ml Inhalt mit 250 min⁻¹ gerührt. Das Gemisch wird in einen Fluid-Bett-Turm mit 350 g Fließbett aus Quarzsand gefüllt und bei Durchleiten eines Kohlendioxidstromes (5,7 l/min) langsam erwärmt. Dabei wird das Wasser langsam ausgetrieben. Nach acht Stunden wird das Material in einen Sammler ausgeblasen. Das Produkt wird über AFM als komplexe Teilchen mit sehr unregelmäßiger Oberflächenstruktur und mittels Laser-Lichtstreuung (1 % in Ethanol) mit einer Teilchengrößenverteilung von 6 nm bis 120 nm mit einem Maximum bei 36 nm charakterisiert.

### Herstellung eines Verträglichkeitsvermittlers D2

100 g des Doppelmetalloxid-hydroxids DMH2 werden in 240 g Polyöl Hüls dispergiert, indem das Gemisch acht Stunden in der Knetkammer mit Sigma-Schaufeln geknetet wird. Dieses Material wird so als Verträglichkeitsvermittler D2 verwendet.

Nachfolgend werden weitere Beispiele zur Herstellung von Verträglichkeitsvermittlern bzw. zur Ausführung wesentlicher Schritte des erfindungsgemäßen Verfahrens angegeben:

### Beispiel 1

### Herstellung eines Verträglichkeitsvermittlers A

In einen LIST® Twin Shaft Batch KneaderReactor (List AG, Schweiz) mit 14 l freiem Volumen werden 8 l Tributen® der Evonik AG gegeben und die Rührer gestartet. Durch die Zugabeöffnung werden langsam 3,5 kg Disperal® P2 der Sasol AG zugegeben und das Gemisch drei Stunden verarbeitet. Dabei steigt die Temperatur langsam bis auf 52°C. Nach dem Rührprozess wird der Druck auf 16 mm reduziert und Restwasser entfernt. Danach wird das Verträglichkeits-Vermittler-Gemisch unter Stickstoff abgefüllt.

### Beispiel 2

### Herstellung eines Verträglichkeitsvermittlers B

In einen beheizbaren 5 l Dissolver werden 2 l Oxoöl LS 13® der Evonik AG gegeben und das Rührwerk gestartet. Danach werden langsam 2 l einer 20 %igen Aufschlämmung von Disperal® P2 der Sasol AG in Ethanol zugegeben. Das Gemisch wird langsam erwärmt, bis die Destillation des Ethanols beginnt. Das Ethanol wird vollständig bei einer Temperatur von 84 bis 102°C abdestilliert, danach wird der Druck reduziert, bis keine Flüssigkeit in einer Kühlfalle (Flüssigstickstoff) mehr nachweisbar ist. Es werden 2,31 kg des Verträglichkeitsvermittlers B erhalten.

### Beispiel 3

### Herstellung eines Masterbatches

In eine Knetkammer mit Sigmaschaufeln werden 100 g Moplen® EP300K (PP) und 100 g Borstar® MB 7542 (HDPE) bei 200°C aufgeschmolzen. Nach 20 Minuten wird eine vollständige Durchmischung angenommen. Zur Schmelze werden 25 g eines modifizierten Rapsöls und 15 g Disperal® P gegeben. Die Schmelze wird drei Stunden geknetet und die Temperatur langsam auf 190°C gesenkt. Nach drei Stunden wird abgekühlt und das Material entnommen. Es wird ein MFi (190°C, 2,16 kg) von 5,5 g gemessen. Bei der AFM-Analyse werden die nanoskaligen Böhmit-Teilchen ohne weitere Agglomeration homogen verteilt festgestellt, eine Phasentrennung der Polyolefine wird nicht festgestellt.

### Beispiel 4

### Herstellung eines Polyolefin-Blends

In die Knetkammer von Beispiel 3 werden 50 g Borealis BL 1481 (HDPE), 50 g ME 1244, 50 g Dow HDPE 25055 E und 50 g Moplen® EP300K (PP) gegeben und wie dort aufgeschmolzen. Nach 20 Minuten Knetzeit bei 200°C werden 15 g des Masterbatches aus Beispiel 3 hinzugefügt und weitere 60 Minuten bei einer Temperatur von 200°C auf 189°C sinkend geknetet. Die Schmelze wird aus der Knetkammer in PTFE-Formen (200 x 200 x 5 mm) abgelassen und dort abgekühlt. Man erhält schwach graue Platten. Die Bestimmung des MFi ergab 6,0 g (190°C/2,16 kg), die Bestimmung der Zugfestigkeit 29 MPa, der Zug-E-Modul 1,1 GPa und die Bruchdehnung 16 %.

### Beispiel 5

In einen Doppelschnecken-Extruder (L/D 50, D = 25 mm) wird ein Gemisch aus 45 % Moplen® EP300K (PP) und 55 % 50 g Borealis BL 1481 gegeben und bei einer Heizzonen-Temperatur von 205°C (Schmelzetemperatur 200°C) aufgeschmolzen. Durch den Einzug wird der Verträglichkeitsvermittler A so dosiert, dass ständig 6,3 Gew.-% bezogen auf die Schmelze eingezogen werden. Die Verweilzeit wird auf 7,5 min eingestellt. Es wird über eine auf 180°C temperierte Düse (4 x 8 mm) ein Profil erhalten, das auf Zimmertemperatur abgekühlt wird. Nach 24 Stunden Lagerzeit werden eine Zugfestigkeit von 30 MPa, eine Bruchdehnung von 17 % und ein Zug-E-Modul von 1,14 GPa bestimmt.

### Beispiel 6

Wie in Beispiel 5 wird ein Granulatgemisch aus 25 % Moplen® EP300K und 75 % Borealis BL 1481 in dem gleichen Extruder bei einer Heizzonentemperatur von 205°C aufgeschmolzen. Über die Zuführung wird der Verträglichkeitsvermittler B derart eingezogen, dass ständig 8,75 Gew.-% bezogen auf die Schmelze dosiert werden. Die Verweilzeit wird auf 8 Minuten eingestellt. Es wird über eine auf 180°C temperierte Düse (3 x 10 mm) ein Profil erhalten, das auf Zimmertemperatur abgekühlt wird. Nach 24 Stunden Lagerzeit werden eine Zugfestigkeit von 29 MPa, eine Bruchdehnung von 14 % und ein Zug-E-Modul von 1,17 GPa bestimmt.

### Beispiel 7

Im gleichen Extruder wie in Beispiel 5 wird ein Polyolefingemisch in Form von 8 mm Flakes aus der DSD-Sammlung bei einer Heizzonen-Temperatur von 207°C aufgeschmolzen. Über dem Einzug wird der Verträglichkeitsvermittler B so eingezogen, dass ständig 7,25 Gew.-% in der Schmelze vorhanden sind. Die Verweilzeit wird auf 9 Minuten eingestellt. Es wird über eine auf 185°C temperierte Düse (4 x 8 mm) ein Profil erhalten, das auf Zimmertemperatur abgekühlt wird. Nach 24 Stunden Lagerzeit werden eine Zugfestigkeit von 27 MPa, eine Bruchdehnung von 19 % und ein Zug-E-Modul von 1,06 GPa bestimmt.

### Beispiel 8

Ein Gemisch aus 320 g Polypropylen Exxon Mobile PP 1055, 300 g eines Gemisches aus 95 % HDPE und 5 % anderen Bestandteilen, überwiegend EPDM, 25 g SBR-Mehl und 25 g des Verträglichkeitsvermittlers D1 wird im Extruder wie in Beispiel 5 bei einer Temperatur von 180°C aufgeschmolzen. Die Verweilzeit wird auf 6 Minuten eingestellt. Es wird über eine auf 175°C temperierte Düse (4 x 8 mm) ein Profil erhalten, das auf Zimmertemperatur abgekühlt wird. Nach 24 Stunden Lagerzeit werden eine Zugfestigkeit von 17,7 MPa, eine Bruchdehnung von 58 %, eine Shore-A-Härte von 74 und ein Zug-E-Modul von 271 MPa bestimmt.

### Beispiel 9

Ein Gemisch aus 50 Teilen PP-EPDM-Blend (aus Stoßfängern), 35 Teilen HDPE Borealis BL 0521, 7,5 Teilen NR-SBR Mehl und 7,5 Teilen des Verträglichkeitsvermittlers D2 wird im Extruder wie in Beispiel 5 bei einer Temperatur von 180°C aufgeschmolzen. Die Verweilzeit wird auf 7,5 Minuten eingestellt. Es wird über eine auf 175°C temperierte Düse (4 x 8 mm) ein Profil erhalten, das auf Zimmertemperatur abgekühlt wird. Nach 24 Stunden Lagerzeit werden eine Zugfestigkeit von 27,2 MPa, eine Bruchdehnung von 37 %, eine Shore-A-Härte von 70 und ein Zug-E-Modul von 282 MPa bestimmt.

### Beispiel 10

Ein Gemisch aus 65 Teilen PP-EPDM-Blend (aus Stoßfängern), 27 Teilen eines Polyolefin-Gemisches aus der DSD-Sammlung (8 mm Flakes), 5 Teilen Cariflex und 3 Teilen des Verträglichkeitsvermittlers DMH 1 werden im Kneter (Sigma-Schaufeln) bei 190°C fünf Stunden unter Kohlendioxid-Atmosphäre geknetet. Das Gemisch wird entnommen und auf 3 mm in einer Retsch®-Mühle granuliert. Das Granulat wird in einen Doppelschneckenextruder gegeben und bei 190°C der Heizzonen und 180°C der Düse (4 x 8 mm) zu einem Profil verarbeitet, das auf Zimmertemperatur abgekühlt wird. Nach 24 Stunden Lagerzeit werden eine Zugfestigkeit von 24,3 MPa, eine Bruchdehnung von 16 %, eine Shore-A-Härte von 82 und ein Zug-E-Modul von 1180 MPa bestimmt.

### Beispiel 11

Ein Gemisch aus 77,5 Teilen eines Polyolefingemisches aus der DSD-Sammlung, 17,5 Teilen PP-EPDM-Blend (aus Stoßfängern) und 5 Teilen des Verträglichkeitsvermittlers D2 wird im Kneter (Sigma-Schaufeln) bei 190°C fünf Stunden unter Kohlendioxid-Atmosphäre geknetet. Das Gemisch wird entnommen und auf 3 mm in einer Retsch®-Mühle granuliert. Das Granulat wird in den Einfülltrichter einer Spritzgießmaschine Arburg Allrounder S mit 180 kN Schließkraft gegeben. Bei 195°C Spritztemperatur wird ein Formteil von 180 x 87 mm mit 68 mm Seitenteilen in einer Stärke von 1,35 mm gespritzt. Die Formteile zeichnen sich durch eine Shore-A-Härte von 78 und einen 20° Glanzwert von 58 aus.

### Beispiel 12

Ein Granulatgemisch aus 67,5 Gew.-% Polypropylen Exxon Mobile PP 1055 und 32,5 Gew.-% Borealis BL 1481 wird in die Einzugszone eines Doppelschnecken-Extruders gegeben und bei 190°C in den ersten zwei Heizzonen aufgeschmolzen. Vor der 3. Heizzone wird über einen Einzugstrichter ein durch einen hochtourigen Mischer hergestelltes Gemisch aus 14,7 Gew.-Teilen Pural® MG61HT (Sasol GmbH) und 85,3 Teilen Arnica S46 (Agip) derart dosiert, dass im Polyolefin-Gemisch 3,75 Gew.-% des Gemisches vorliegen. Die Temperatur der folgenden Heizzonen beträgt 180, 190 und 185°C, die der Strangdüse 168°C. Es wird ein homogener Strang erzeugt, der nach Luftkühlung (8 m) mittels Schlagmesser granuliert wird. Das Extruder-Granulat ist nach AFM- und DSC-Untersuchung einphasig. Der MFi-Wert bei 230°C (2,16 kg) liegt bei 9,35.

Das Extruder-Granulat wird mittels einer Spritzgießmaschine Arburg Allrounder 720H mit einem Flachstab-Werkzeug zur Herstellung von Prüfstäben, das auf 25°C temperiert wurde, verspritzt. Die Prüfung der Stäbe ergab folgende Eigenschaften:
Zugfestigkeit: 35,5 MPa
Zug-E-Modul: 1465 MPa
Bruchdehnung: 12,6 %
Shore-D-Härte: 61
Charpy-Schlagzähigkeit: 5,2 J/m²
Vicat-Temperatur: 134°C

### Beispiele 13 - 16

Ein Granulatgemisch aus Borealis BL 1481 und verschiedenen Polypropylensorten wird gemäß Beispiel 12 hergestellt und mit einem Gemisch aus einem LDH und einem Hydrauliköl verarbeitet. In der folgenden Tabelle sind die Mengen und in der nachfolgenden Tabelle die Eigenschaften dargestellt.

| Material | Bsp. 13 | Bsp. 14 | Bsp. 15 | Bsp. 16 |
|---|---|---|---|---|
| Borealis HDPE | 42 | 40 | 38 | 65 |
| Clyrell RC 5056 | 58 | - | - | - |
| RF 365 MO | - | 60 | - | 35 |
| PP XN 125-P | - | - | 62 | - |
| Pural MG61HT | 65 | 60 | - | - |
| HT 3 Hydrotalcit | - | - | 58 | - |
| DHT 4A | - | - | - | 70 |
| Arnica S 68 | 35 | 40 | - | - |
| Wiolgan HE 46 | - | - | 42 | 30 |

Clyrell PC 5056 ist ein modifiziertes Polypropylen der LyondellBasell Co., RF 365 MO ist ein modifiziertes Polypropylen der Borealis Co., Hostalen PP XN 125-P ist ein modifiziertes Polypropylen der Clariant Corp., Pural MG61HT ist ein Magnesium-Aluminium LDH der Sasol AG, DHT 4A ist ein Hydrotalcit der Kyowa Chemical Industry, Arnica S68 ist ein HEES-HVLP Hydrauliköl der Agip SE, Wiolgan HE 46 ist ein TMP-basiertes HEES Hydrauliköl.

Die Eigenschaften der mittels einer Spritzgießmaschine Arburg Allrounder 720H mit einem Flachstab-Werkzeug hergestellten Prüfstäben wiesen folgende Eigenschaften auf:

| Eigenschaft | Bsp.13 | Bsp. 14 | Bsp. 15 | Bsp. 16 |
|---|---|---|---|---|
| MFi (230°C/2,16 kg) | 11,8 | 18,0 | 4,9 | 6,4 |
| Zugfestigkeit (MPa) | 29,7 | 32,3 | 29,1 | 30,6 |
| Zug-E-Modul (MPa) | 1475 | 1680 | 1240 | 1210 |
| Bruchdehnung (%) | 9,5 | 8,9 | 13,5 | 15,5 |
| Charpy (kJ/m²) | 5,0 | 6,0 | 10,0 | 5,0 |
| Shore-D-Härte | 60 | 58 | 45 | 46 |

### Beispiele 17 - 20

Ein Granulat aus dem Polyolefin-Recycling der Kaskada Ltd. (Polyolefingemisch veränderlicher Zusammensetzung) wird mit verschiedenen erfindungsgemäßen Verträglichkeitsvermittlern verarbeitet, die Zusammensetzung ist in der folgenden Tabelle zusammengefasst. Die Verarbeitung erfolgt in einem Berstorff Doppelschneckenextruder ZE 25Ax48D mit 10 Heizzonen bei L/D 48. Die erfindungsgemäßen Verträglichkeitsvermittler werden nacheinander zudosiert, so dass bei allen Compounds 4,25 Gew.-% der Verträglichkeitsvermittler enthalten sind, und zwar das LDH in Zone 2, das Hydrauliköl in Zone 4, in Zone 9 wird durch Anlegen einer Pumpe der Druck vermindert zur Entgasung. Die allgemeine Temperatur der Heizzonen ist 200±5°C, die Durchsatzgeschwindigkeit beträgt 600 mm/min. Nach einer Abkühlstrecke (Luft der Umgebung) von 8 m wird das Strangmaterial durch Messer granuliert. Das verträglich gemachte Compound wird anschließend auf einer Spritzgießmaschine Arburg Allrounder 720H mit einem Flachstab-Werkzeug bei einer Formtemperatur von 45°C zu Prüfstäben mit einer Geschwindigkeit der Förderung von 150 mm/s verarbeitet. Die Prüfstäbe werden anschließend 8 Tage bei Umgebungstemperatur konditioniert und danach der Materialprüfung unterworfen; die Eigenschaftswerte sind in der nachfolgenden Tabelle zusammengestellt:

| Material | Beispiel 17 | Beispiel 18 | Beispiel 19 | Beispiel 20 |
|---|---|---|---|---|
| Polyolefingemisch Gew.-Teile | 95,75 | 95,75 | 95,75 | 95,75 |
| Hycite 713 Gew.-Teile | 2,80 | 0 | 0 | 0 |
| Sorbacid 911 Gew.-Teile | 0 | 2,80 | 0 | 0 |
| Perkalite A100 Gew.-Teile | 0 | 0 | 2,80 | 0 |
| Kisuma 5A Gew.-Teile | 0 | 0 | 0 | 2,80 |
| Arnica S 68 Gew.-Teile | 1,45 | 1,45 | 1,45 | 1,45 |

Hycite 713 ist ein Hydrotalcit der Clariant International Ltd., Sorbacid 911 ist ein Hydrotalcit der Clariant International Ltd., Perkalite A100 ist ein Rosin-modifiziertes LDH der Akzo Nobel SE, Kisuma 5A ist ein technisches Magnesiumhydroxid der Kisuma Chemicals Ltd., Arnica S 68 ist ein HEES-HVLP Hydrauliköl der Agip SE

| Eigenschaft | Polyolefin ohne Zusatz | Beispiel 17 | Beispiel 18 | Beispiel 19 | Beispiel 20 |
|---|---|---|---|---|---|
| Zugfestigkeit (MPa) | 10,8 | 22,5 | 22,9 | 23,6 | 14,7 |
| Bruchdehnung (%) | 22 | 14 | 12 | 13 | 10 |
| Zug-E-Modul (MPa) | 875 | 1360 | 1430 | 1490 | 1070 |
| Shore-D-Härte | 42 | 45 | 46 | 48 | 43 |

## Patentansprüche

1. Verträglichkeitsvermittler zur Verträglichmachung von an sich unverträglichen Polyolefin-Gemischen, **dadurch gekennzeichnet, dass** er aus einem Gemisch aus mindestens einem nanoskaligen Doppelmetalloxidhydroxid und mindestens einem Öl, ausgewählt aus der folgenden Gruppe besteht:
- Hydrauliköl vom HEES-, HETG- oder HEPR-Typ;
- synthetisches Öl auf der Basis von Poly-α-olefinen;
- Buten-1-Oligomeres, Buten-1-Propylen-Oligomeres oder Butadien-Oligomeres mit einer Molmasse von 180 bis 10.000.

2. Verträglichkeitsvermittler nach Anspruch 1, **dadurch gekennzeichnet, dass** das nanoskalige Doppelmetalloxidhydroxid aus mindestens zwei Metallen besteht und ausgewählt ist aus der folgenden Gruppe:
- Doppelmetalloxidhydroxide des Aluminiums, Magnesiums, Zinks oder Indiums;
- natürliches Böhmit;
- ein oder mehrere Stoffe der Hydrotalkitgruppe;
- Hydrotalkit, Comblainit, Desautelsit, Pyroaurit, Reevesit, Sergeevit, Stichtit und/oder Takovit.

3. Verträglichkeitsvermittler nach einem der Ansprüche 1 bis 2, **dadurch gekennzeichnet, dass** das nanoskalige Doppelmetalloxidhydroxid zahlreiche Kavitäten und/oder Schichten aufweist, in welche das Hydrauliköl teilweise eingelagert ist.

4. Verfahren zur Herstellung eines Verträglichkeitsvermittlers gemäß einem der Ansprüche 1 bis 3, folgende Schritte umfassend:
- Bereitstellen einer Dispersion eines nanoskaligen Doppelmetalloxidhydroxids;
- Bereitstellen eines Öls, ausgewählt aus der Gruppe
∘ Hydrauliköl vom HEES-, HETG- oder HEPR-Typ;
∘ synthetisches Öl auf der Basis von Poly-α-olefinen;
∘ Buten-1-Oligomeres, Buten-1-Propylen-Oligomeres oder Butadien-Oligomeres mit einer Molmasse von 180 bis 10.000,
- Vermischen der Dispersion des Doppelmetalloxidhydroxids mit dem Öl bei einer Temperatur im Bereich von 60 bis 180°C sowie unter Abgabe des in der Dispersion enthaltenen Lösungsmittels.

5. Verfahren nach Anspruch 4, folgende Schritte umfassend
- Vermischen von zwei oder mehr in Wasser oder einem organischen Lösungsmittel dispergierten Metalloxide, Metallhydroxide und/oder Metalloxidhydroxide unter Scherung, sodass sich keine Agglomerate bilden;
- Trocknen der Agglomerate, sodass sich nanoskaligen Teilchen in Schichten oder nadelförmigen Kristallen ausbilden;
- Vermischen der nanoskaligen Teilchen mit dem Öl unter hoher Scherkraft.

6. Verfahren zur Verträglichmachung an sich unverträglicher oder nicht mischbarer Polyolefine, **dadurch gekennzeichnet, dass** 99 bis 70 Teile eines oder mehrerer Polyolefine gemeinsam mit 0,5 bis 10 Teilen eines nanoskaligen Doppelmetalloxidhydroxids und mit 0,5 bis 20 Teilen eines Öls, ausgewählt aus der folgenden Gruppe:
- Hydrauliköl vom HEES-, HETG- oder HEPR-Typ,
- synthetisches Öl auf der Basis von Poly-α-olefinen,
- Buten-1-Oligomeres, Buten-1-Propylen-Oligomeres oder Butadien-Oligomeres mit einer Molmasse von 180 bis 10.000,
unter Einwirkung hoher Scherkräfte verarbeitet werden.

7. Verfahren zur Verträglichmachung an sich unverträglicher oder nicht mischbarer Polyolefine, **dadurch gekennzeichnet, dass** 99 bis 70 Teile eines oder mehrerer Polyolefine mit 1 bis 30 Teilen eines Verträglichkeitsvermittlers gemäß einem der Ansprüche 1 bis 3 vermischt werden.

8. Verfahren zur Herstellung von Formteilen aus Gemischen von Polyolefinen und Verträglichkeitsvermittlern, **dadurch gekennzeichnet, dass** 99 bis 70 Teile eines Polyolefingemisches mit 0,5 bis 10 Teilen eines nanoskaligen Doppelmetalloxidhydroxids und mit 0,5 bis 20 Teilen eines Öls, ausgewählt aus der folgenden Gruppe:
- Hydrauliköl vom HEES-, HETG- oder HEPR-Typ,
- synthetisches Öl auf der Basis von Poly-α-olefinen,
- Buten-1-Oligomeres, Buten-1-Propylen-Oligomeres oder Butadien-Oligomeres mit einer Molmasse von 180 bis 10.000,
unter Einwirkung hoher Scherkräfte im Extruder, im Mischer-Kneter, im Kneter oder in der Spritzgießmaschine verarbeitet werden.

9. Verfahren nach Anspruch 8, **dadurch gekennzeichnet, dass** Polyolefin-Gemische aus Recycling-Verfahren ohne vorherige Sortierung eingesetzt werden.
